Europäisches Patentamt

**European Patent Office**

Office européen des brevets

(19)

(11) Veröffentlichungsnummer: **0 002 055**
**B1**

(12) **EUROPÄISCHE PATENTSCHRIFT**

(21) Anmeldenummer: **78101380.0**

(51) Int. Cl.³: **C 03 B 27/00**

(22) Anmeldetag: **16.11.78**

(54) **Vorrichtung und Verfahren zum gleichzeitigen thermischen Vorspannen mehrerer nebeneinander hängender Glasscheiben in ruhender Stellung.**

(30) Priorität: **22.11.77 FR 7734987**

(43) Veröffentlichungstag der Anmeldung:
**30.05.79 Patentblatt 79/11**

(45) Bekanntmachung des Hinweises auf die Patenterteilung:
**11.03.81 Patentblatt 81/10**

(84) Benannte Vertragsstaaten:
**BE CH DE FR GB LU NL SE**

(56) Entgegenhaltungen:
FR - A - 853 006
GB - A - 541 049
GB - A - 1 212 208
GB - B - 773 469

(73) Patentinhaber: **SAINT-GOBAIN INDUSTRIES**
**62, Bd Victor Hugo**
**F-92209 Neuilly sur Seine (FR)**
(84) Benannte Vertragsstaaten:
**BE CH DE FR GB LU NL SE**
(73) Patentinhaber: **Vereinigte Glaswerke GmbH**
**Viktoriaallee 3-5**
**D-5100 Aachen (DE)**
(84) Benannte Vertragsstaaten:
**DE**

(72) Erfinder: **Roth, Mario**
**Laurentiusstrasse 13**
**D-5100 Aachen (DE)**
(72) Erfinder: **Winandy, Johann**
**Maastrichter Strasse 8**
**D-5120 Herzogenrath (DE)**
(72) Erfinder: **Siemonsen, Hans-Peter**
**Im Hasenfeld 16**
**D-5100 Aachen (DE)**

(74) Vertreter: **Biermann, Wilhelm, Dr.-Ing.**
**Compagnie de Saint-Gobain-Pont-A-Mousson**
**Zweigniederlassung Deutschland Postfach 14 90**
**Oppenhoffallee 143**
**D-5100 Aachen (DE)**

**Vorrichtung und Verfahren zum gleichzeitigen thermischen Vorspannen
mehrerer nebeneinander hängender Glasscheiben in ruhender Stellung**

Die Erfindung betrifft eine Vorrichtung zum gleichzeitigen thermischen Vorspannen meh-. rerer an einem Transportwagen nebeneinander hängender Glasscheiben in ruhender Stellung durch schroffes Abkühlen mit Luft, bestehend aus zwei einander gegenüber angeordneten Blaskästen, deren Frontplatten mit einer Vielzahl von Blasdüsen versehen sind. Sie umfaßt ferner ein Verfahren zum gleichzeitigen thermischen Vorspannen mehrerer an einem einzigen Transportwagen nebeneinder hängender Glasscheiben in ruhender Stellung mit Hilfe einer erfindungsgemäßen Vorrichtung.

Bei der diskontinuierlichen Herstellung vorgespannter Glasscheiben kleineren Formats, wie sie beispielsweise für die Seitenverglasung von Kraftfahrzeugen Verwendung finden, ist es üblich, mehrere Glasscheiben gleichzeitig mit Hilfe von zangenförmigen Greifvorrichtungen an einem einzigen entlang einer Transportbahn verfahrbaren Wagen aufzuhängen, gleichzeitig im Vorspannofen zu erwärmen, und sie mit Hilfe einer Blasvorrichtung gleichzeitig vorzuspannen. Hierfür übliche Blasvorrichtungen bestehen aus großflächigen Blaskästen, deren Frontplatten auf ihrer gesamten Fläche mit Austrittsöffnungen für die Blasluft versehen sind. Bei diesem bekannten Verfahren wird taktweise gearbeitet, indem die Transportwagen mit den Glasscheiben in einem vorgegebenen Rhythmus von einer Behandlungsstation in die nächste transportiert werden.

Dieses bekannte Verfahren läßt sich grundsätzlich immer dann mit Vorteil anwenden, wenn verhältnismäßig kleine Glasscheiben, gegebenenfalls nach einem Biegeprozeß, vorgespannt werden sollen. Auf diese Weise läßt sich die Kapazität einer an sich für die Herstellung größerer Glasscheiben konzipierten Fertigungslinie bei der Herstellung kleinerer Glasscheiben besser ausnutzen.

Es hat sich gezeigt, daß bei dieser bekannten Technik der Vorspannungsgrad der verschiedenen an einem Transportwagen hängenden Glasscheiben nicht immer einheitlich ist. Diese Erscheinung ist umso ausgeprägter, je dünner die vorzuspannenden Glasscheiben sind. Beträgt die Dicke der Glasscheiben beispielsweise nur etwa 3 mm, dann wird die ungleichförmige Vorspannung sogar so ausgeprägt, daß die für die Sicherheitsglas-Eigenschaften erforderliche einheitliche feinkrümelnde Bruchstruktur häufig nicht mehr garantiert werden kann.

Es ist auch bereits bekannt, einen Blaskasten zum Vorspannen dünner Glasscheiben derart zu unterteilen, daß der Blaskasten insgesamt aus einer Mehrzahl von in Abständen voneinander angeordneten Blaskastenelementen besteht, von denen jedes über eine eigene ggf. regelbare Luftzufuhrleitung mit der Druckluftquelle verbunden ist, und zwischen denen die heiße Blasluft abströmen kann (FR—PS 853 006). Bei dieser bekannten Vorrichtung sind die einzelnen Blaskastenelemente klein im Verhältnis zur Größe der vorzuspannenden Glasscheiben, und auf jede Glasscheibe wirkt eine Mehrzahl von Blaskastenelementen ein. Im Bereich zwischen den einzelnen Elementen erfolgt keine ausreichende Kühlung der Glasscheiben, so daß eine einheitliche Vorspannung auf der gesamten Glasoberfläche nicht gewährleistet ist. Außerdem ist die separate Luftzufuhr zu jedem Blaskastenelement mit einem erheblichen konstruktiven Aufwand verbunden.

Der Erfindung liegt die Aufgabe zugrunde, eine aus zwei einander gegenüber angeordneten Blaskästen bestehende Blasvorrichtung so auszubilden, daß sich ohne wesentliche Erhöhung des apparativen Aufwandes beim gleichzeitigen Vorspannen mehrerer nebeneinander hängender Glasscheiben geringer Dicke eine einwandfreie gleichmäßige Vorspannung innerhalb aller Glasscheiben ergibt.

Diese Aufgabe wird dadurch gelöst, daß die beiden Blaskästen in eine der Anzahl der gleichzeitig vorzuspannenden Glasscheiben entsprechende Anzahl von auf einem gemeinsamen Luftverteilerkasten mit Abstand voneinander angeordneten und gegenüber diesen vorspringenden Teilblaskästen unterteilt sind, deren Frontplatten jeweils gleichmäßig mit Blasdüsen besetzt sind, der Größe einer vorzuspannenden Glasscheibe entsprechen und zwischen sich Abströmkanäle für die Blasluft bilden.

Schwierigkeiten hinsichtlich einer gleichmäßigen Vorspannung unter den genannten Bedingungen ergeben sich normalerweise bei solchen Blaskästen, die mit gelochten Frontplatten versehen sind, oder deren Frontplatten mit verhältnismäßig kurzen Düsen in Form von Blasröhrchen versehen sind. Bei Blaskästen mit verhältnismäßig langen Düsenröhrchen in der Größenordnung von 20 cm und mehr ist das Problem des Abströmens weniger gravierend, weil die Luft hier durch die Zwischenräume zwischen den langen Düsenröhrchen entweichen kann. Doch haben solche Blaskästen mit sehr langen Düsenröhrchen andere Nachteile, so daß man in der Praxis nach Möglichkeit Blaskästen mit kurzen Düsenröhrchen verwendet. Durch die erfindungsgemäßen Maßnahmen wird es nunmehr möglich, diese an sich bewährten Blaskästen mit kurzen Düsenröhrchen auch da mit Erfolg zum Einsatz zu bringen, wo mehrere relativ dünne Glasscheiben, die wegen ihrer geringen Wärmekapazität eine sehr intensive Abkühlung erfordern, gleichzeitig in einer Blasvorrichtung vorgespannt werden sollen.

Während man bisher bestrebt war, die Glasscheiben in möglichst geringem Abstand voneinander an dem Transportwagen aufzuhängen, werden nach dem erfindungsgemäßen Verfahren unter Verwendung der erfindungsgemäßen Vorrichtung die einzelnen Glasscheiben in einer solchen Entfernung voneinander an dem gemeinsamen Transportwagen aufgehängt, daß innerhalb der Abblasvorrichtung in diesen Zwischenbereichen die Blasluft durch Abströmkanäle abgeführt werden kann.

Durch die erfindungsgemäße Vergrößerung des gegenseitigen Abstandes der einzelnen Glasscheiben an einem Transportwagen und durch die erfindungsgemäße Ausgestaltung der Blaskästen wird es möglich, Zonen, in denen die Blasluft sich staut, zu vermeiden und die Glasscheiben mit einer wesentlich höheren Kühlgeschwindigkeit abzublasen, als es bisher mit solchen Anlagen möglich war, ohne dabei den einfachen und robusten Aufbau eines Blaskastens mit nur kurzen Düsenröhrchen grundsätzlich zu ändern.

In vorteilhafter Ausgestaltung der Erfindung ist der Querschnitt der Abströmkanäle so bemessen, daß die aus der Frontplatte eines Teilblaskastens in der Zeiteinheit ausströmende Luftmenge ohne Staubildung durch einen Abströmkanal abfließen kann.

Zur Unterstützung der Abströmung der Blasluft können auf die Abströmkanäle wirkende Absaugvorrichtungen vorgesehen sein. Ein besonders einfaches und wirkungsvolles Mittel der Unterstützung der die Luft abführenden Strömung in den Abströmkanälen besteht darin, daß innerhalb der Abströmkanäle an die Teilblaskästen oder den Luftverteilerkasten angeschlossene und von diesen mit unter Überdruck stehender Luft beaufschlagte Injektoren angeordnet sind.

Zur Erreichung einer gleichmäßigen Vorspannung innerhalb der einzelnen Glasscheiben ist es ferner von Vorteil, daß die Frontplatten der Teilblaskästen in ihrer Form dem Biegeradius der vorzuspannenden Glasscheiben angepaßt sind, wobei in der Regel zwischen den Mündungen der Blasröhrchen und der Glasoberfläche ein gleichbleibender Abstand in der Größenordnung von 30 bis 70 mm anzustreben ist.

Eine bevorzugte Ausführungsform der Erfindung wird anhand der Zeichnungen näher beschrieben. Von den Zeichnungen zeigt:

Fig. 1 einen Blaskasten nach der Erfindung mit drei Teilblaskästen in perspektivischer Darstellung, und

Fig. 2 die aus zwei Blaskästen bestehende Abblasvorrichtung in Form eines horizontalen Schnittes.

An dem Transportwagen 1, der auf einer nicht dargestellten Transportbahn durch die verschiedenen Stationen der Vorspannlinie gefahren wird, sind drei gleich große Glasscheiben 2 mit Hilfe der zangenförmigen Greifvorrichtungen 3, die die Glasscheiben am oberen Rand fassen, befestigt. Die Glasscheiben sind etwa 3 mm dick und sind in einer voraufgehenden Bearbeitungsstation gebogen worden. Sie sind für die Seitenverglasung von Kraftfahrzeugen bestimmt. Der Abstand A zwischen zwei Glasscheiben beträgt größenordnungsmäßig etwa 20 cm.

Jeder der beiden Blaskästen weist drei vorspringende Teil-Blaskästen 6 auf, die jeweils mit einer mit Blasröhrchen 7 versehenen Frontplatte 8 versehen wird. Die Blasröhrchen haben eine Länge von etwa 80 mm, der Durchmesser der Düsenöffnung beträgt etwa 4 mm. Die Frontplatten 8 sind in Anpassung an die Wölbung der Glasscheiben 2 leicht gebogen. Die Teilblaskästen 6 sind auf dem Verteilerkasten 10 angeordnet, der seinerseits einen umlaufenden Flansch 11 aufweist, mit dem er mit Hilfe von die Bohrungen 12 durchdringenden Schrauben an den Gegenflansch 13 befestigt wird, der den Blaskasten über ein Gehäuse 14 an die Versorgungsleitung 15 für die Blasluft anschließt.

Die Teilblaskästen 6 weisen eine Tiefe C von etwa 20—30 cm auf, ihr gegenseitiger Abstand B beträgt etwa 15 bis 20 cm. Auf diese Weise werden zwischen zwei Teilblaskästen 6 in senkrechter Richtung verlaufende Abströmkanäle 18 gebildet, in denen die aus den Blasöffnungen 7 austretende Luft nach oben und unten aus der Blasvorrichtung entweichen kann.

Zur Unterstützung der Luftströmung innerhalb der Abströmkanäle 18 bzw. zur Erzeugung einer Absaugwirkung sind innerhalb dieser Kanäle 18 Injektoren 20 angeordnet. Diese in Düsen- bzw. Rohrform ausgebildeten Injektoren 20 sind an den Seitenwänden der Teilblaskästen 6, d.h. an den die Abströmkanäle bildenden Seitenwänden, im oberen und im unteren Bereich angeordnet und stehen mit dem unter Überdruck stehenden Hohlraum der Blaskästen in Verbindung. Während des Absaugvorganges strömt aus diesen Injektoren 20 Luft unter Überdruck aus, und erzeugt in Art einer bekannten Strahlpumpe innerhalb der Abströmkanäle 18 eine Saugwirkung, die die Abströmung der zwischen der Frontplatte 8 und der Glasscheibe 2 seitlich austretenden Blasluft begünstigt.

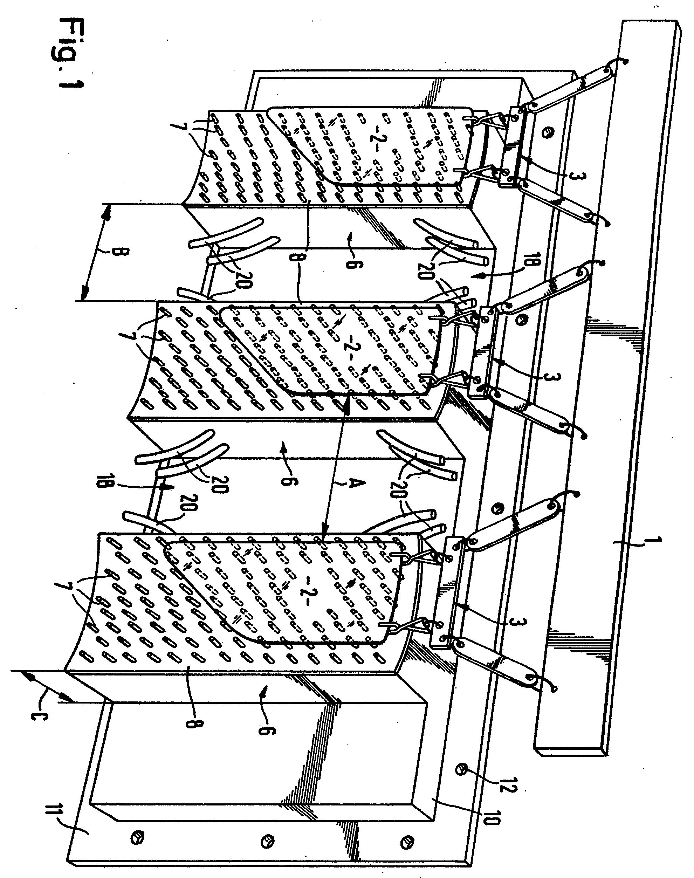

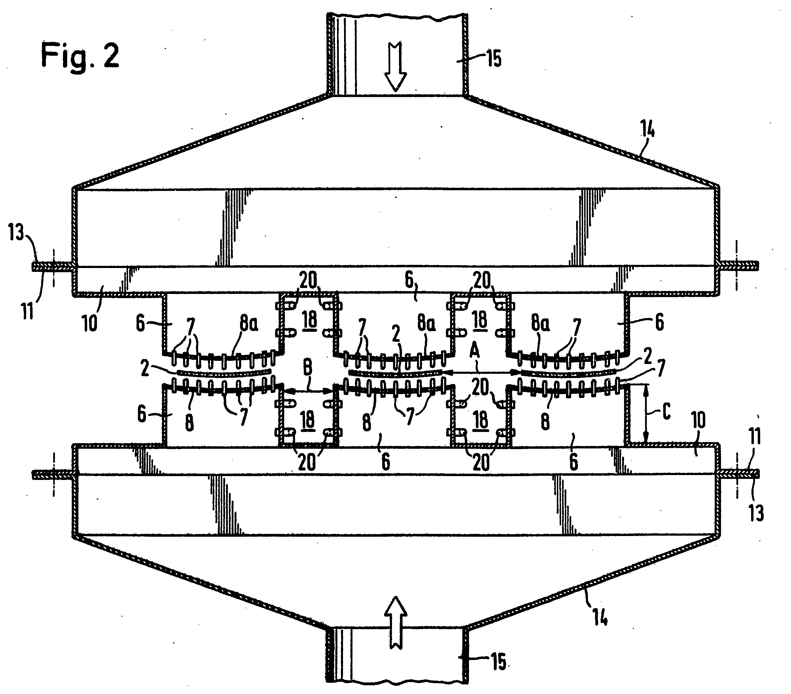

In ihrem Zusammenwirken sind zwei zueinander zugeordnete Blaskästen in Fig. 2 dargestellt. Man erkennt dort, daß die Frontplatten 8a der mit dem in Fig. 1 dargestellten Blaskästen zusammenwirkenden gegenüberliegenden Blaskästen eine entsprechende konvexe Form aufweisen. Während des Abblasvorganges werden die Blaskästen vorzugsweise gegenläufig in Richtung senkrecht zur Zeichenebene der Fig. 2 oszillierend bewegt, um eine gleichmäßige Abkühlung der gesamten Glasoberfläche zu erreichen. Die Mündungen der Blasröhrchen 7 haben von der Oberfläche der Glasscheiben einen Abstand zwischen 3 und 7 cm. Der statische Luftdruck innerhalb der Teilblaskästen 6 beträgt während des Abblasens etwa 1500 bis 1700 mm Wassersäule.

## Patentansprüche

1. Vorrichtung zum gleichzeitigen thermischen Vorspannen mehrerer an einem Transportwagen (1) nebeneinander hängender Glasscheiben (2) in ruhender Stellung durch schroffes Abkühlen mit der Luft, bestehend aus zwei einander gegenüber angeordneten Blaskästen, deren Frontplatten (8) mit einer Vielzahl von Blasdüsen (7) versehen sind, dadurch gekennzeichnet, daß die beiden Blaskästen in eine der Anzahl der gleichzeitig vorzuspannenden Glasscheiben (2) entsprechende Anzahl von auf einem gemeinsamen Luftverteilerkasten (10) mit Abstand voneinander angeordneten und gegenüber diesem vorspringenden Teilblaskästen (6) unterteilt sind, deren Frontplatten (8) jeweils gleichmäßig mit Blasdüsen (7) besetzt sind, der Größe einer vorzuspannenden Glasscheibe (2) entsprechen und zwischen sich Abströmkanäle (18) für die Blasluft bilden.

2. Vorrichtung nach Anspruch 1, dadurch gekennzeichnet, daß der Querschnitt der Abströmkanäle (18) so bemessen ist, daß die aus der Frontplatte (8) eines Teilblaskastens in der Zeiteinheit ausströmende Luftmenge ohne Staubildung durch einen Abströmkanal (18) abfließen kann.

3. Vorrichtung nach Anspruch 1 und 2, dadurch gekennzeichnet, daß zur Unterstützung der Abströmung der Blasluft auf die Abströmkanäle (18) wirkende Absaugvorrichtung vorgesehen sind.

4. Vorrichtung nach Anspruch 3, dadurch gekennzeichnet, daß innerhalb der Abströmkanäle (18) an die Teilblaskästen (6) oder den Luftverteilerkasten (10) angeschlossene und von diesen mit unter Überdruck stehender Luft beaufschlagte Injektoren (20) angeordnet sind.

5. Vorrichtung nach Anspruch 1 bis 4, dadurch gekennzeichnet, daß die Frontplatten (8) der Teilblaskästen (6) in ihrer Form der Biegung der Glasscheiben (2) angepaßt sind.

6. Verfahren zum gleichzeitigen thermischen Vorspannen mehrerer an einem einzigen Transportwagen (1) nebeneinander hängender Glasscheiben in ruhender Stellung, für eine Vorrichtung nach einem der Ansprüche 1 bis 5, dadurch gekennzeichnet, daß die einzelnen Glasscheiben (2) in einer solchen Entfernung voneinander an dem gemeinsamen Transportwagen (1) aufgehängt werden, daß innerhalb der Abblasvorrichtung in diesen Zwischenbereichen die Blasluft durch Abströmkanäle (18) abgeführt werden kann.

## Revendications

1. Dispositif pour la trempe thermique simultanée de plusieurs glaces suspendues les unes à côté des autres à un chariot de transport (1) dans une position de repos, par refroidissement brusque au moyen d'air, constitué de deux boîtes de soufflage (4) qui sont disposées l'une en face de l'autre et dont les plaques antérieures (8) sont pourvues d'un grand nombre d'ajutages de soufflage (7), caractérisé en ce que les deux boîtes de soufflage (4) sont subdivisées en un nombre de boîtes de soufflage partielles (10) correspondant au nombre de glaces (2) à tremper simultanément, ce boîtes partielles étant disposées à une certaine distance les unes des autres sur une boîte de distribution commune (10) et faisant saillie sur celle-ci et leurs plaques antérieures (8) étant garnies chacune uniformément d'ajutages de soufflage (7), correspondant à la grandeur d'une glace (2) à tremper et formant entre elles des conduits d'évacuation (18) pour l'air de soufflage.

2. Dispositif suivant la revendication 1, caractérisé en ce que la section transversale des conduits d'évacuation (18) est dimensionnée de manière que le volume d'air sortant par unité de temps de la plaque antérieure (8) d'une boîte de soufflage partielle puisse s'écouler sans entrave par un conduit d'évacuation (18).

3. Dispositif suivant les revendications 1 et 2, caractérisé en ce que des dispositifs d'aspiration travaillant dans les conduits d'évacuation (18) sont prévus pour assister l'évacuation de l'air de soufflage.

4. Dispositif suivant la revendication 3, caractérisé en ce que des injecteurs raccordés aux boîtes de soufflage partielles (6) ou à la boîte de distribution d'air (10) et alimentés par celle-ci au moyen d'air sous pression sont prévus à l'intérieur des conduits d'évacuation (18).

5. Dispositif suivant les revendications 1 à 4, caractérisé en ce que la forme des plaques antérieures (8) des boîtes de soufflage partielles (6) est adaptée à la courbure des glaces (2).

6. Procédé pour la trempe thermique simultanée de plusieurs glaces suspendues les unes à côté des autres à un chariot de transport, dans une position de repos, destiné à un dispositif suivant l'une quelconque des revendications 1 à 5, caractérisé en ce que les glaces individuelles (2) sont suspendues au chariot de transport commun (1) à une distance les unes des autres telle qu'à l'intérieur du dispositif de soufflage, l'air de soufflage puisse être évacué dans les espaces qui les séparent par des conduits d'évacuation (18).

## Claims

1. An apparatus for the simultaneous tempering of a number of unmoving glass sheets (2), hanging side by side from a transport carriage (1), by sudden air cooling, made up of two wind boxes (4), placed opposite each other, whose front plates (8) have a number of blowing nozzles (7), characterised by a division-up of the two wind boxes (4) into a number, dependent on the number of glass sheets (2) to be tempered at the same time, of spaced wind box sections (6) which are positioned on a common air distribution box (10), the sections (6) running out from the box (10), and the front plates (8) of the sections (6) each have a regular system of blowing nozzles (7), answering to the size of a glass sheet (2) to be tempered, and between them air outlet channels (18) for the blowing air are formed.

2. An apparatus as claimed in claim 1, characterised in that the cross-section of the air outlet channels (18) is of such a size that the amount of air coming out through the front plate (8) of a blowing box section in one unit of time may be let off through one air outlet channel (18) without the building up of any pressure.

3. An apparatus as claimed in claims 1 and 2, characterised in that for increasing the outlet of blowing air suction, parts are present acting on the air outlet channels (18).

4. An apparatus as claimed in claim 3, characterised in that injectors are placed within the air outlet channels (18) and are joined up with the wind box sections (6) or the air distribution box (10) and are supplied by the last-named with gage pressure air.

5. An apparatus as claimed in any one of claims 1 to 4, characterised in that the front plates (8) of the wind box sections (6) are designed with a form taking into account the bent form of the glass sheets (2).

6. A process for the simultaneous thermal tempering of a number of unmoving glass sheets hanging side by side from a single transport carriage (1), for use with an apparatus as claimed in any one of claims 1 to 5, characterised by hanging the single glass sheets (2) with such a spacing therebetween on the common transport carriage (1) that within the blowing apparatus in these inbetween parts the blowing air may be let off through outlet channels (18).

Fig.1

Fig. 2